# EUROPÄISCHE PATENTSCHRIFT

(11) **EP 3 068 555 B1**
(45) Veröffentlichungstag und Bekanntmachung des Hinweises auf die Patenterteilung: **29.08.2018**
(21) Anmeldenummer: 14766449.4
(22) Anmeldetag: 11.09.2014
(51) Int. Cl.: B21B 45/00

(54) **VERFAHREN ZUM VERARBEITEN VON ERHITZTEM GUT**
METHOD FOR PROCESSING HEATED MATERIAL
PROCÉDÉ DE TRAITEMENT DE MATÉRIAU CHAUFFÉ

(30) Priorität: 12.11.2013 DE 102013223040
(43) Veröffentlichungstag der Anmeldung: 21.09.2016
(73) Patentinhaber: SMS group GmbH, 40237 Düsseldorf (DE)
(72) Erfinder: SEIDEL, Jürgen, 57223 Kreuztal (DE); SUDAU, Peter, 57271 Hilchenbach (DE); ANDERS, Denis, 57250 Netphen (DE); ALKEN, Johannes, 57076 Siegen (DE); KIPPING, Matthias, 57562 Herdorf (DE)
(74) Vertreter: Klüppel, Walter
(86) Internationale Anmeldenummer: PCT/EP2014/069341
(87) Internationale Veröffentlichungsnummer: WO 2015/071004

(56) Entgegenhaltungen:
- EP-A1- 1 377 125
- EP-A2- 1 808 501
- EP-B1- 0 084 902
- CN-A- 101 580 703
- FR-A- 1 416 688

## Beschreibung

Die Erfindung betrifft ein Verfahren zum Verarbeiten von erhitztem Gut, wobei das Gut entlang eines Förderweges geführt wird und im Bereich des Förderweges von mindestens einem Reflektorelement abgedeckt und gegen Wärmeverlust geschützt wird, wobei das Reflektorelement mittels einer Flüssigkeit gekühlt wird.

Ein solches Verfahren ist aus der EP 1 377 125 A1 und der EP 0 084 902 B1 bekannt. Aus diesem Dokument ist es bekannt, beim Warmwalzen von Stahl das zu walzende Gut durch ein Hitzeschild vor Wärmeverlust zu schützen, wobei der Hitzeschild eine Strahlungswärmereflexionsfläche aufweist. Vorgesehen ist, dass der Hitzeschild während des Einsatzes gekühlt wird, um das Reflexionsvermögen des Schildes aufrecht zu erhalten.

Die Verwendung von Alkohol als Kühlflüssigkeit für ein Kühlsystem ist beispielsweise bekannt aus der EP 1 808 501 A2. Die Verwendung von Glykol als Kühlflüssigkeit ist beispielsweise bekannt aus der chinesischen Anmeldung CN 101 580 703 A.

Generell gilt, dass warme Dick- bzw. Dünnbrammen, Bleche, Bänder oder anderes warmes Gut beim Transport Energie an die Umgebung abgeben. Um diese Temperaturverluste zu reduzieren, werden Wärmedämmhauben eingesetzt, die oberhalb oder unterhalb oder auch neben dem warmen Gut angeordnet sind. Einsatzorte von Wärmedämmhauben können beispielsweise innerhalb und hinter einer Stranggießanlage, hinter einem CSP-Ofen, zwischen einer Vor- und Fertigstraße, im Bereich einer Coilbox (Seitendämmung) und innerhalb einer Fertigstraße sein.

Dabei gibt es verschiedene Wärmedämmprinzipien. Zum einen kann Wärme absorbiert und dabei eine Wärmedämmfläche erwärmt werden. Zum anderen kann Wärme zurück auf das warme Gut reflektiert werden.

Wärmedämmhauben offenbaren beispielsweise die EP 0 005 340 A1, die EP 0 059 093 B1 und die US 4 595 358. Wärmedämmhauben bestehen zumeist aus Keramikfasern und dünnen Metallmembranen, welche sich beim Anstrahlen durch das warme Gut rasch erwärmen und so den Wärmefluss vom Gut an die Umgebung reduzieren. Die Keramikfasern sowie die Metallmembranen sind dabei einer hohen Temperatur und einer großen Temperaturwechselbelastung ausgesetzt. Trotz Verwendung von hochwertigen hochtemperaturbeständigen Materialien ist deren Gebrauchsdauer begrenzt, was einen entsprechend hohen Wartungsaufwand und hohe Wartungskosten nach sich ziehen. Weiterhin ist bei einer diskontinuierlichen Fahrweise (Wechsel von Walz- und Pausenzeiten) die Dämmwirkung teils schlecht. Die in der Pause abgekühlte Dämmhaubenoberfläche muss sich, sobald das warme Gut (z. B. ein Vorband) unter der Wärmedämmhaube liegt, jedes Mal erneut erwärmen, um eine Dämmwirkung zu erzielen.

Eine Ausführungsform einer Dämmhaube in Form eines Wärmestrahlungsreflektors offenbart die EP 0 032 536 B1 und die FR 1.416.688. Ein Wärmestrahlreflektor soll ein niedriges Absorptionsvermögen aufweisen und in Form von Kreis- bzw. Ellipsenbogenstücken ausgebildet sein. Da die Reflektorbleche nicht gekühlt sind, oxidieren sie sehr schnell und verlieren infolge der hohen thermischen Belastung schnell ihre gute Reflexionsfähigkeit, was Probleme verursacht.

Bei der eingangs genannten Verfahrensweise, wie in der EP 0 084 902 B1 beschrieben, hat es sich als nachteilig herausgestellt, dass mit niedriger Wassertemperatur (weniger als 100 °C) gekühlt wird und es sehr leicht zu einem Verdampfen des Wassers kommt, das hier zur Kühlung eingesetzt wird. Daher sind hier Maßnahmen angesprochen, die zu einer Erhöhung der Temperaturdifferenz zwischen dem Kühlmittel (Wasser) und dem Reflektor führen, wobei spezielles Dämmmaterial vorgesehen ist. Dies allerdings ruft wiederum entsprechende Kosten hervor. Weiterhin entsteht bei zu niedriger Reflektortemperatur eine Kondensation von Wasserdampf im Bereich der Reflektoroberfläche, was die Reflexionsfähigkeit negativ beeinträchtigt.

Der Erfindung liegt daher die Aufgabe zugrunde, ein Verfahren der eingangs genannten Art so fortzubilden, dass die Reflexion optimal erfolgen kann und die Reflexionsfähigkeit im Betrieb möglichst gut erhalten bleibt, um so auf kostentreibenden Maßnahmen verzichtet zu können; dennoch soll eine effiziente Kühlung des Reflektors gewährleistet werden.

Die Lösung dieser Aufgabe durch die Erfindung ist dadurch gekennzeichnet, dass die Flüssigkeit Glykol ist oder Glykol aufweist oder dass die Flüssigkeit Alkohol ist oder Alkohol aufweist oder dass die Flüssigkeit Thermoöl ist.

Die Flüssigkeit wird dabei bei der Kühlung bevorzugt nur bis zu einer maximalen Temperatur erhitzt, bei der sie noch keinen Dampfdruck aufweist.

Bevorzugt ist die Flüssigkeit eine Mischung aus Glykol und Wasser.

Die Flüssigkeit kann dabei in einem geschlossenen Kreislauf durch das Reflektorelement geführt werden, wobei es mindestens einen Wärmetauscher passiert. Die Flüssigkeit wird dabei bevorzugt im geschlossenen Kreislauf durch ein Wärmspeicherelement geleitet.

Es hat sich dabei bewährt, wenn die Flüssigkeit beim Durchlaufen des geschlossenen Kreislaufs geregelt auf einer vorgegebenen Temperatur gehalten wird. Als Stellgröße kann hierbei bevorzugt der Volumenstrom der Flüssigkeit durch den Kreislauf herangezogen werden. Die Regelung der Temperatur der Flüssigkeit erfolgt bevorzugt so, dass sie zwischen 80 °C und 400 °C beträgt. Die Regelung der Temperatur der Flüssigkeit erfolgt ferner bevorzugt so, dass die Flüssigkeit nicht verdampft. Das Temperaturniveau der Flüssigkeit soll bevorzugt also so hoch sein, dass die Flüssigkeit beim Durchlauf des Reflektorelements nicht verdampft bzw. kein Dampfdruck im Betriebstemperaturbereich aufgebaut wird. Vorzugsweise sollte die Flüssigkeit auch nicht brennbar sein.

Die vom Wärmetauscher von der Flüssigkeit entnommene Wärme kann einem Sekundärprozess zugeführt werden, um diese Wärme einer weiteren Nutzung zuzuführen. Dabei kann insbesondere eine Wärmerückgewinnung erfolgen bzw. eine Umwandlung in elektrischen Strom.

Das mindestens eine Reflektorelement kann nach Ablauf einer vorgegebenen Nutzungszeit einer Reinigung unterzogen werden, um die Oberfläche des Reflektors sauber und funktionstüchtig zu halten. Dieses Reinigen kann gemäß einer bevorzugten Ausführungsform ein Abblasen der Reflektoroberfläche mit einem Gas, insbesondere mit Luft, umfassen, um eine Ablagerung von Schmutz und Dunst zu verhindern. Eine andere bevorzugte Möglichkeit stellt darauf ab, dass das Reinigen der Reflektoroberfläche den Einsatz mechanischer Mittel, insbesondere einer Reinigungsbürste, umfasst. Das Reinigen der Reflektoroberfläche kann auch den Einsatz von flüssigen und/oder chemischen Reinigungsmitteln umfassen, insbesondere von Ethanol oder Salpetersäure oder einer Mischung von Reinigungsmitteln und Wasser.

Das zum Einsatz kommende Reflexions- bzw. Spiegelmaterial hat dabei bevorzugt einen Reflexionsgrad von mindestens 70 %. Als Reflexions- bzw. Spiegelmaterial hat sich Reinaluminium mit mehr als 99 % Aluminium bewährt. Ferner hat es sich bewährt, wenn als Reflexions- bzw. Spiegelmaterial ein solches Material verwendet wird, das im Bereich einer Wärmestrahlung mit einer Wellenlänge zwischen 0,5 und 10 µm wirkt.

Die Erfindung stellt also insbesondere auf den Einsatz von Glykol als Kühlmittel ab, das bei höherer Temperatur als Wasser eingesetzt bzw. betrieben werden kann, ohne im Reflektorbereich zu verdampfen. Hiermit kann die Taupunkttemperatur definiert überschritten werden. Sondermaßnahmen zur Erhöhung der Temperaturdifferenz zwischen dem Kühlmittel (Glykol) und dem Reflektor - namentlich der Einsatz spezieller Dämmmaterialien - sind vorteilhaft nicht nötig.

Der Vorteil des eingesetzten Glykols bzw. der Glykol-Wasser-Mischung ist, dass hierdurch auch eine Frostsicherung gegeben ist, was sich insbesondere bei geschlossenen Wärmetauschersystemen vorteilhaft bemerkbar macht.

Die Kühlung der Reflektoren erfolgt bevorzugt im geschlossenen Kühlkreis, zumeist bestehend aus den Hauptkomponenten Pumpe, Reflektor und Wärmetauscher zur Abfuhr der vom Reflektor aufgenommene Wärme sowie den dazugehörigen Leitungen und Messelementen für die Regelung. Es kann auch ein Wärmespeicher innerhalb des Kühlkreises angeordnet sein.

Bei der Kühlung kann eine indirekte Temperaturüberwachung des Reflektorelements (Spiegels) und des Kühlmittels durch eine Messung und Regelung der Kühlmittelmenge sowie der Messung der Kühlmitteltemperaturen im Kühlmitteltransportkreis bzw. vor und/oder hinter dem innengekühlten Reflektor erfolgen. Hierbei ist bevorzugt eine mathematische Berücksichtigung des Zusammenhangs zwischen den Kühlmitteltemperaturen und der Reflektoroberflächentemperatur vorgesehen, sowie zwischen gemessenen Kühlmitteltemperaturen und der Siedetemperatur der Kühlflüssigkeit, insbesondere des Glykols, innerhalb des Reflektors. Die Prozessparameter werden entsprechend überwacht und in zulässigen Grenzen gehalten.

Insbesondere erfolgt die Regelung der Temperatur der Flüssigkeit so, dass die Flüssigkeit beim Durchlauf durch das Reflektorelement nicht verdampft bzw. kein Dampfdruck aufgebaut wird.

Vorteilhaft kann auch eine Nutzung der Reflektoraußenkühlung erfolgen sowie eine alternative Nutzung der Reflektorkühleinrichtung als Vorbandkühler, gegebenenfalls auch nur für einen Teil der Einrichtung. Bei der Nutzung der Einrichtung als Vorbandkühler kann die Kühlmittelmenge erhöht und die Reflektoren aus der Walzlinie gefahren bzw. geschwenkt werden.

Die Reflektoren können im unteren Bereich schräg angeordnet sein, wobei durch Kombination von Rütteln und Abblasen herabfallender Zunder entfernt und so die Reflektoroberfläche sauber gehalten werden kann.

Bezüglich des eingesetzten Glykols sei folgendes erwähnt. Zum Einsatz kommt bevorzugt (Mono-)Ethylenglycol (MEG), das unter dem Trivialnamen Glycol bekannt ist. Es handelt sich um den einfachsten zweiwertigen Alkohol mit der chemischen Bezeichnung Ethan-1,2-diol. Es ist das einfachste vicinale Diol (Methandiol bzw. Formaldehyd-Hydrat ist ein geminales Diol). Die Bezeichnung Glycole wird darüber hinaus für zwei Klassen von Diolen verwendet, die sich vom Ethylenglycol ableiten. Zum einen handelt es sich um 1,2-Diole, wie 1,2-Propandiol. Zum anderen handelt es sich um α,ω-Diole, die durch Kondensation von Ethylenglycol entstehen. Beispiele sind Diethylenglycol (DEG) und Triethylenglycol (TEG).

Gegenüber Wärmeabsorptionsdämmhauben haben Wärmestrahlungs-Reflektor-Dämmhauben folgende Vorteile:
Die Wärmedämmwirkung stellt sich unmittelbar ein. Das langsame Aufheizen der Dämmhaubenoberfläche (z. B. in Form eines Membranblechs) nach einer Pause entfällt.

Bei geeignetem Reflexionsmaterial und Arbeitsbedingungen ist die Wirkung sehr effizient. Erfindungsgemäß besitzt das Reflexionsmaterial einen Reflexionsgrad von mehr als 70 %.

Da der Hauptteil der Wärmestrahlung reflektiert wird, ist die Temperaturbelastung der Dämmhaube relativ gering.

Die Gebrauchsdauer der Reflexions-Dämmhaube ist länger und der Wartungsaufwand geringer als im Falle der Absorptions-Dämmhaube.

Um den Effekt eines Wärmestrahlungsreflektors nutzen und die Eigenschaften erhalten zu können, sollte der Reflektor bzw. der Spiegel aus einem geeigneten Material mit guten Reflexionseigenschaften bestehen. Das Material sollte vor Restwärmebelastung und damit vor Oxidation oder Zerstörung geschützt werden. Ferner sollte die Oberfläche des Reflektors von Zeit zu Zeit gereinigt bzw. vor Schmutzablagerungen geschützt werden.

Um dies zu erreichen, haben sich verschiedene Maßnahmen bewährt.

Als Reflexions- bzw. Spiegelmaterial können Glasspiegel mit Sicherheitsglas und beispielsweise einer Aluminiumreflexionsschicht eingesetzt werden. Eingesetzt werden können auch Metallspiegel aus Edelstahl-, Bronze-, Kupfer-, Nickel- oder Aluminiumblech oder Spiegel mit einer Aluminium-, Aluminium-Kupfer-, Nickel- oder Chrom-Beschichtung bzw. einer Beschichtung aus mehreren Materialien, die bevorzugt im Bereich der Wellenlänge der Wärmestrahlung (λ = 0,5 bis 10 µm) wirken. Als Träger für eine Beschichtung sind bevorzugt Metallbleche oder andere nichtmetallische Materialien möglich. Es kann sich dabei um eine dünne Beschichtung oder eine aufgebrachte Folie handeln.

Auch kann die Spiegelfläche beispielsweise aus Aluminiumblech, bevorzugt aus Reinaluminium mit mehr als 99 % Aluminiumanteil, matt, walzblank, lediglich gereinigt (was kostengünstig ist) oder chemisch (beispielsweise mit HNO₃) oder mechanisch poliert ausgeführt sein.

Die Oberfläche kann ohne oder mit Beschichtung, insbesondere Vakuumbeschichtung, Lackversiegelung, Anodisierung, Behandlung mit Anti-Oxidationsmitteln oder anderen schützenden Maßnahmen versehen sein.

Damit der Reflektor bzw. der Spiegel die Temperaturbelastung dauerhaft übersteht (Aluminium schmilzt beispielsweise bei ca. 660 °C) und die Oberfläche nicht oxidiert, wird die Reflektorfläche auf der vom warmen Gut (Bramme, Vorband, etc.) abgewandten Seite gekühlt. Die reflektierende bzw. spiegelnde Seite des Reflektors wird so beispielsweise auf einer maximalen Temperatur von weniger als 400 °C gehalten und sollte möglichst größer als 80 °C sein.

Die Kühlung der Reflexionsflächen einer Dämmstrecke, die aus mehreren Einheiten besteht, erfolgt dabei bezogen auf die Gesamtstrecke bevorzugt symmetrisch, damit sich keine ungleichmäßige Dämmwirkung über der Produktbreite einstellt. Dabei kann das Kühlmittel symmetrisch beispielsweise von beiden Seiten ein- und mittig abgeleitet oder abwechselnd in einer Dämmstrecke von der Antriebsseite nach der Bedienungsseite und an der nächsten Dämmstrecke umgekehrt von der Bedienungsseite nach der Antriebsseite geführt werden.

Der Reflektor bzw. Spiegel kann dabei als Wärmetauscher ausgeführt sein und zum Teil oder komplett von innen gekühlt werden. Alternativ wird die Reflektorplatte bzw. Spiegelplatte an der Rückseite mit dem Kühlmedium beaufschlagt, d. h. beispielsweise angesprüht, und so gekühlt.

Die Energie des Kühlmediums kann optional an ein Wärmerückgewinnungssystem abgegeben werden. Die Restwärme, die zur Reflektorkühlung verwendet wird, kann auch für andere Wärme-verbrauchende Prozesse verwendet werden.

Das Kühlsystem wird mit einem Prozessmodell in der Art optimal gesteuert, dass bei Erfüllung der Prozess- und Anlagengrenzen möglichst eine hohe Kühlmitteltemperatur eingestellt bzw. eine minimale Kühlmittelmenge eingesetzt wird, um eine geringe Pumpenenergie aufwenden zu müssen. Dabei wird die Kühlmittelmenge der Kühlpumpe(n) bzw. Ventilstellungen zur Kühlung der

Reflexions-Wärmedämmhauben auch unter anderem in Abhängigkeit der folgenden Bedingungen eingestellt:
- Eingestrahlte Wärmemenge bzw. Produktbreite und Produkttemperatur;
- Produkt unter der Wärmedämmhaube vorhanden oder nicht (ist keine Wärmequelle, d. h. kein Produkt bzw. Gut, unter der Dämmhaube vorhanden, kann die Kühlmittelpumpe deaktiviert werden) oder es wird die Wärme eines Wärmespeichers verwendet;
- Gemessene Temperatur des vorlaufenden und ablaufenden Kühlmediums;
- Gemessenes Druckniveau im Wärmetauscher (bei einem geschlossenen System);
- Gemessene Reflektor-Oberflächentemperatur an ausgewählten Stellen.

Weiterhin kann das Kühlsystem bzw. die eingestrahlte Wärmemenge durch Messung der vorlaufenden und ablaufenden Kühlmedientemperatur überwacht und die Menge des Kühlmediums, die Kühlmitteltemperatur oder indirekt die Temperatur der Spiegeloberfläche geregelt werden. Hierdurch wird auch eine eventuelle Verschmutzung der Spiegeloberfläche durch Vergleich mit einer Referenzbedingung erkannt und daraus eine notwendige Wartung abgeleitet bzw. erkannt.

Um gute Reflexionseigenschaften aufrecht zu erhalten, sollte die Reflexionsschicht (Spiegel) der Wärmedämmhaube möglichst frei von Schmutzpartikeln gehalten werden. Dabei bieten sich bevorzugt folgende Maßnahmen an:
Es kann ein manuelles oder automatisches Reinigen, Aufbereiten oder Polieren der Spiegeloberfläche mit einer Reinigungsvorrichtung (z. B. mit einer Reinigungsbürste) in der Produktionspause vorgesehen werden.

Die Reinigungsvorrichtung kann dabei fest neben der Reflexions-Wärmedämmhaubenstrecke installiert sein oder aus einem externen Aggregat bestehen.

Es kann eine Verwendung einer trocknen oder einer feuchten drehbaren Reinigungswalze vorgesehen werden, die an den Reflexionsdämmhauben-Oberflächen vorbei bewegt wird (ähnlich wie bei einer Autowaschanlage). Die Form der Reinigungswalzen wird dabei bevorzugt an die Spiegelform (gerade oder gekrümmt) angepasst. Die Reinigungswalze kann mit harten oder weichen Borsten oder Stoffstreifen versehen sein oder eine Schaumgummischicht aufweisen.

Die Reinigung kann trocken erfolgen oder unter Einsatz von Wasser und Reinigungsmittel (z. B. Ethanol), einer Mischung von Wasser und Reinigungsmittel, einem chemischen Reinigungsmittel (z. B. Salpetersäure).

Ein chemisches oder mechanisches Nachpolieren oder Schmirgeln von Zeit zu Zeit ist ebenfalls möglich.

Ferner ist es möglich, ein ständiges oder zeitweises Erzeugen eines Nieder- oder Hochdruck-Luftstromes entlang der oder gegen die Spiegeloberfläche auf der Produktseite vorzusehen.

Es sollte auch der Einsatz von Spritzwasser und eine Dampfbildung im Bereich der Reflektoren vermieden werden. Hierzu bieten sich eine Transportrollen-Innenkühlung, Querabspritzungen oder Gebläse an.

Ist mit Schwallwasser oder mit Dampf zu rechnen, sollte die Spielgeleinheit (zeitweise) aus der Produktionslinie heraus bewegt werden.

Vor der Spielgelfläche kann auch optional ein Membranblech, eine gekühlte Glasplatte oder eine sonstige Schutzplatte angeordnet werden.

In der Zeichnung sind Ausführungsbeispiele der Erfindung dargestellt. Es zeigen:
- Fig. 1: schematisch die Seitenansicht eines Teils einer Förderelements für zu walzendes warmes Gut, wobei oberhalb und unterhalb des Gutes Reflektorelemente angeordnet sind, um Wärme auf das Gut zurückzustrahlen,
- Fig. 2: schematisch die Draufsicht auf das Förderelement nach Fig. 1,
- Fig. 3: schematisch die Ansicht eines Reflektorelements, gesehen in Förderrichtung des Guts,
- Fig. 4a: bis
- Fig. 4f: schematisch verschiedene Ausgestaltungen von Reflektorelementen, gesehen im Schnitt durch die Wärmetauscher, in Förderrichtung des Guts,
- Fig. 5: ein Reflektorelement samt Kühleinrichtung, gesehen in Förderrichtung des Guts, und
- Fig. 6: das Reflektorelement nach Fig. 5, gesehen in der Seitenansicht.

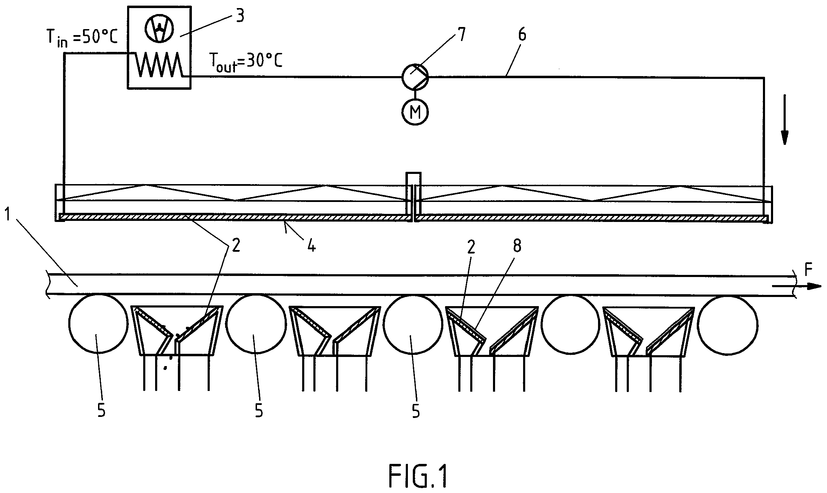

In Fig. 1 ist warmes Gut 1 in Form einer Bramme zu sehen, das in Förderrichtung F gefördert wird. Hierfür ist ein Rollgang 5 vorhanden. Sowohl oberhalb der Bramme 1 als auch unterhalb derselben, nämlich zwischen zwei Rollen des Rollgangs 5, sind Reflektorelemente 2 vorhanden, die Wärme der heißen Bramme 1 zurückreflektieren. Die Reflektorelemente 2 sind demgemäß als Reflexions-Wärmedämmhauben ausgeführt, wobei zu erkennen ist, dass diese mit einem Wärmetauscher 3 in Verbindung stehen. Wärme, die von der Reflektoroberfläche 4 der Reflektorelemente 2 nicht direkt auf die Bramme 1 zurückreflektiert wird, wird mittels einer Flüssigkeit gekühlt, die in einer Ringleitung 6 geführt wird. Bei der Flüssigkeit handelt es sich im Ausführungsbeispiel um Glykol oder eine Mischung aus Glykol und Wasser. Die Flüssigkeit wird mittels einer motorangetriebenen Umwälzpumpe 7 durch eine Ringleitung 6 gefördert. Auch kann ein Wärmespeicher innerhalb der Ringleitung 6 angeordnet sein (nicht dargestellt), um die Kühlflüssigkeit auf Temperaturniveau zu halten.

Die von der Bramme 1 abgestrahlte Wärme wird demgemäß zum größten Teil durch die spiegelnde Reflektoroberfläche 4 der Reflektorelemente 2 wieder reflektiert und so der Brammenwärmeverlust reduziert. Der Teil der Wärme, der vom Reflektorelement absorbiert wird, wird durch das dargestellte Umlaufkühlsystem abgeführt und so mittels des Wärmetauschers 3 an die Umgebung abgegeben. Hierdurch wird das Reflektorelement 2 vor Zerstörung bzw. Oxidation geschützt.

Das Fluid wird an der von der Bramme 1 abgewandten Seite der Reflektoroberfläche 4 entlang geführt, um Wärme aufzunehmen und das Reflektorelement 2 zu kühlen.

Die Reflektoroberfläche 4 der Reflektorelemente 2 kann auch in Längs- oder Querrichtung etwas gekrümmt ausgebildet sein, um die mechanische Steifigkeit zu erhöhen.

Die Reflektorelemente 2, die unterhalb der Bramme 1 angeordnet sind, werden von herabfallendem Zunder belastet. Diese Zunderpartikel werden durch periodisches Abblasen mit einem Luftstrom gereinigt, was durch die geneigte Spiegelflächen erleichtert wird. Möglich ist es auch, dass vor dem Spiegel beispielsweise eine dünne Metallmembrane 8 (als Verschleißteil vorgesehen) zum Schutz angebracht wird; dies ist für die beiden rechten unteren Reflektorelemente 2 angedeutet. Alternativ kann auch auf der Oberseite eine Reflexionsdämmung mit Spiegeln und auf der Unterseite zwischen den Rollen eine Absorptionsdämmung konventioneller Art (mit Membranblech und/oder Keramikdämmfasern) kombiniert werden.

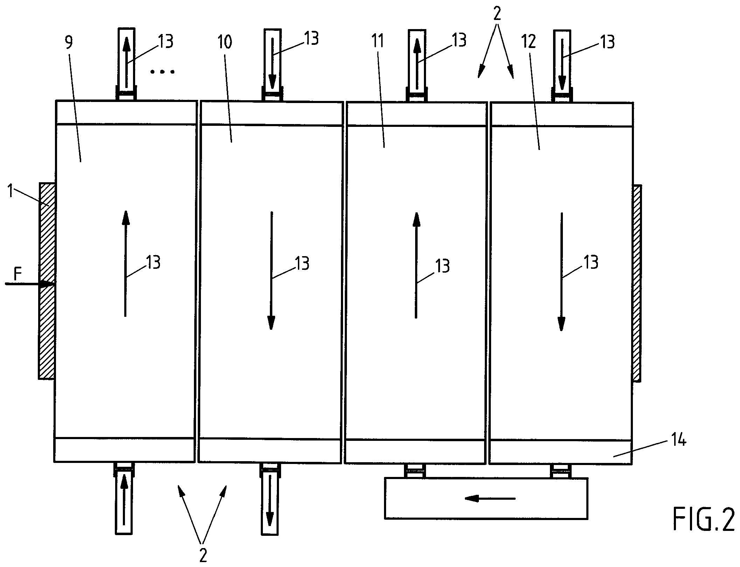

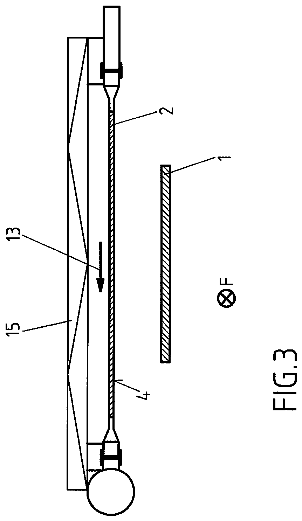

Wie die Spiegelsegmente der Reflexions-Wärmedämmhauben 2 konstruktiv ausgeführt sein können, ist in Fig. 2 und Fig. 3 angedeutet. Die Segmente 9, 10, 11 und 12 werden von einem Kühlmittelstrom 13 durchströmt. Das Kühlmittel kann sich in einer Beruhigungsstrecke 14 beruhigen. Der Spiegel des Reflektorelements 2 wird von einem Spiegelträger 15 gehalten. Die Reflektorelemente werden hier im Wechsel von der Antriebseite (AS) nach der Bedienseite (BS) und von BS nach AS durchströmt.

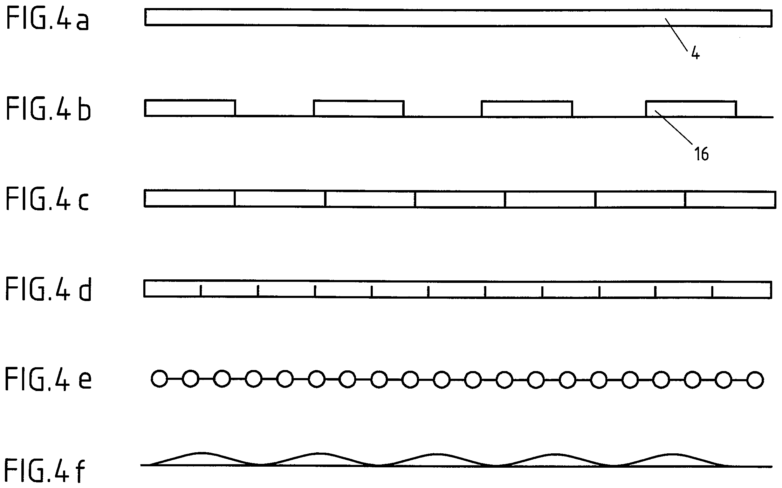

Verschiedene Ausführungsformen von Reflektorelementen, bei denen eine Seite als Spiegel wirkt, sind in den Figuren 4a bis 4f dargestellt.
Fig. 4a zeigt einen breiten rechteckförmigen Kanal, an dessen Unterseite sich die Reflektoroberfläche 4 befindet.
Fig. 4b zeigt eine Rechteckrohr-Steg-Rechteckrohr- Ausgestaltung. Die Kühlkanäle sind mit 16 bezeichnet.
Fig. 4c zeigt mehrere schmale rechteckförmige Kanäle.
Fig. 4d zeigt einen rechteckförmigen Kanal mit Rippen auf der Heißseite (Spiegelseite).
Fig. 4e zeigt eine Rohr-Steg-Rohr-Ausgestaltung.
Fig. 4f zeigt einen Plattenwärmetauscher mit gewellter Rückwand.

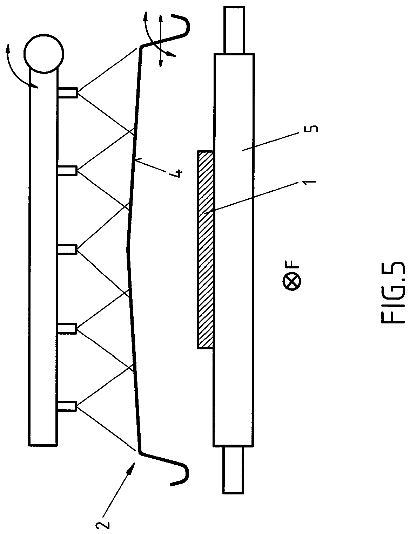

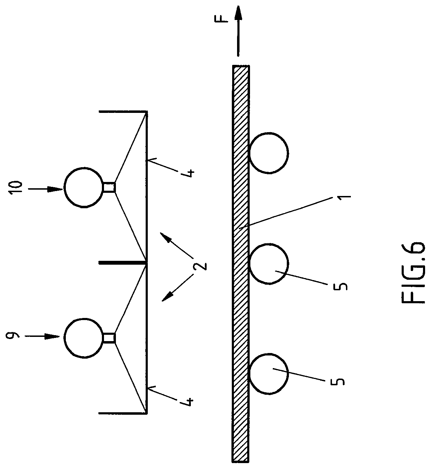

In Fig. 5 und Fig. 6 ist eine alternative Reflexions-Wärmedämmhaubenkühlung (Spiegelkühlung) dargestellt. Hier wird der Reflektor von der Rückseite her mit einem Kühlmittelstrahl beaufschlagt. Als Kühleinrichtung kann eine Sprühkühlung, laminare Kühlung, Wasserpoolkühlung oder eine ähnliche Anordnung vorgesehen werden.

Das Kühlmittel wird hier beispielsweise aus einem Kühlmittelverteilerrohr auf die Reflektor-Rückenfläche gespritzt und läuft auf dem Reflektor zur Seite und kühlt so den Spiegel.

Damit kein Fluid bzw. Dampf die Spiegelfläche benetzt oder die Bramme 1 bzw. den Rollgang 5 kühlt, wird das Kühlmittel aufgefangen, gesammelt und gezielt abgeleitet. Der Reflektor (Spiegel) kann genau wie die Kühleinrichtung aus der Produktionslinie herausgeschwenkt oder bewegt werden.

Optional kann auch bei Bedarf diese Spiegelkühleinrichtung als Produktkühlung (z. B. als Vorbandkühlung) eingesetzt werden. In diesem Falle kann der Spiegel auch für sich aus der Transportlinie herausbewegt werden und das Kühlmedium (dann bevorzugt reines Wasser) kühlt beispielsweise das Vorband.

### Bezugszeichenliste:

- 1: warmes Gut
- 2: Reflektorelement
- 3: Wärmetauscher
- 4: Reflektoroberfläche
- 5: Rollgang
- 6: Ringleitung
- 7: Umwälzpumpe
- 8: Metallmembran
- 9: Segment
- 10: Segment
- 11: Segment
- 12: Segment
- 13: Kühlmittelstrom
- 14: Kühlmittel-Beruhigungsstrecke
- 15: Spiegelträger
- 16: Kühlmittelkanal

- F: Förderrichtung

## Patentansprüche

1. Verfahren zum Verarbeiten von erhitztem Gut (1), wobei das Gut entlang eines Förderweges geführt wird und im Bereich des Förderweges von mindestens einem Reflektorelement (2) abgedeckt und gegen Wärmeverlust geschützt wird, wobei das Reflektorelement (2) mittels einer Flüssigkeit gekühlt wird,
**dadurch gekennzeichnet,**
**dass** das Reflektorelement ein Reflektionsmaterial mit einem Reflektionsgrad von mehr als 70 % aufweist;
**dass** die Flüssigkeit Glykol ist oder Glykol aufweist oder dass die Flüssigkeit Alkohol ist oder Alkohol aufweist oder dass die Flüssigkeit Thermoöl ist.

2. Verfahren nach Anspruch 1, **dadurch gekennzeichnet, dass** die Flüssigkeit eine Mischung aus Glykol und Wasser ist.

3. Verfahren nach einem der Ansprüche 1 bis 2, **dadurch gekennzeichnet, dass** die Flüssigkeit in einem geschlossenen Kreislauf durch das Reflektorelement (2) geführt wird, wobei es mindestens einen Wärmetauscher (3) passiert.

4. Verfahren nach Anspruch 3, **dadurch gekennzeichnet, dass** die Flüssigkeit im geschlossenen Kreislauf durch ein Wärmspeicherelement geleitet wird.

5. Verfahren nach Anspruch 3 oder 4, **dadurch gekennzeichnet, dass** die Flüssigkeit beim Durchlaufen des geschlossenen Kreislaufs geregelt auf einer vorgegebenen Temperatur gehalten wird.

6. Verfahren nach Anspruch 5, **dadurch gekennzeichnet, dass** als Stellgröße der Volumenstrom der Flüssigkeit durch den Kreislauf herangezogen wird.

7. Verfahren nach Anspruch 5 oder 6, **dadurch gekennzeichnet, dass** die Regelung der Temperatur der Flüssigkeit so erfolgt, dass sie zwischen 80 °C und 400 °C beträgt.

8. Verfahren nach Anspruch 7, **dadurch gekennzeichnet, dass** die Regelung der Temperatur der Flüssigkeit so erfolgt, dass die Flüssigkeit nicht verdampft.

9. Verfahren nach einem der Ansprüche 3 bis 8, **dadurch gekennzeichnet, dass** die vom Wärmetauscher (3) von der Flüssigkeit entnommene Wärme einem Sekundärprozess zugeführt wird.

10. Verfahren nach einem der Ansprüche 1 bis 9, **dadurch gekennzeichnet, dass** das mindestens eine Reflektorelement (2) nach Ablauf einer Nutzungszeit einer Reinigung unterzogen wird.

11. Verfahren nach Anspruch 10, **dadurch gekennzeichnet, dass** das Reinigen ein Abblasen der Reflektoroberfläche (4) mit einem Gas, insbesondere mit Luft, umfasst.

12. Verfahren nach Anspruch 10, **dadurch gekennzeichnet, dass** das Reinigen der Reflektoroberfläche (4) den Einsatz mechanischer Mittel, insbesondere einer Reinigungsbürste, umfasst.

13. Verfahren nach Anspruch 10, **dadurch gekennzeichnet, dass** das Reinigen der Reflektoroberfläche (4) den Einsatz von flüssigen und/oder chemischen Reinigungsmitteln umfasst, insbesondere von Ethanol oder Salpetersäure oder einer Mischung von Reinigungsmitteln und Wasser.

## Claims

1. Method of processing heated material (1), wherein the material is guided along a conveyor path and in the region of the conveyor path covered by at least one reflector element (2) and protected against heat loss, wherein the reflector element (2) is cooled by means of a liquid, **characterised in that** the reflector element comprises a reflection material with a reflectance of more than 70% and the liquid is or comprises glycol or the liquid is or comprises alcohol or the liquid is thermo-oil.

2. Method according to claim 1, **characterised in that** the liquid is a mixture of glycol and water.

3. Method according to one of claims 1 and 2, **characterised in that** the liquid is conducted in a closed circuit through the reflector element (2), wherein it traverses at least one heat exchanger (3).

4. Method according to claim 3, **characterised in that characterised in that** the liquid is conducted in the closed circuit through a heat storage element.

5. Method according to claim 3 or 4, **characterised in that** the liquid when running through the closed circuit is kept regulated to a predetermined temperature.

6. Method according to claim 5, **characterised in that** the volume flow of the liquid through the circuit is utilised as setting variable.

7. Method according to claim 5 or 6, **characterised in that** the regulation of the temperature of the liquid is carried out in such a way that it is between 80° C and 400° C.

8. Method according to claim 7, **characterised in that** the regulation of the temperature of the liquid is carried out in such a way that the liquid does not vaporise.

9. Method according to any one claims 3 to 8, **characterised in that** the heat extracted from the liquid by the heat exchanger (3) from the liquid is fed to a secondary process.

10. Method according to any one claims 1 to 9, **characterised in that** the at least one reflector element (2) undergoes cleaning after expiry of a period of use.

11. Method according to claim 10, **characterised in that** the cleaning comprises blasting the reflector surface (4) with a gas, particularly with air.

12. Method according to claim 10, **characterised in that** the cleaning of the reflector surface (4) comprises the use of mechanical means, particularly a cleaning brush.

13. Method according to claim 10, **characterised in that** the cleaning of the reflector surface (4) comprises the use of liquid and/or chemical cleaning medium, particularly ethanol or nitric acid or a mixture of cleaning medium and water.

## Revendications

1. Procédé pour le traitement d'un matériau chauffé (1), dans lequel le matériau est guidé le long d'une voie de transport et est recouvert, dans la zone de la voie de transport, d'au moins un élément réflecteur (2) et est protégé contre la perte de chaleur ; dans lequel l'élément réflecteur (2) est refroidi au moyen d'un liquide, **caractérisé en ce que** l'élément réflecteur présente un matériau réfléchissant possédant un degré de réflexion supérieur à 70 % ;
**en ce que** le liquide est du glycol ou présente du glycol ou **en ce que** le liquide est un alcool ou présente un alcool ou **en ce que** le liquide est une huile thermique.

2. Procédé selon la revendication 1, **caractérisé en ce que** le liquide est un mélange de glycol et d'eau.

3. Procédé selon l'une quelconque des revendications 1 à 2, **caractérisé en ce que** liquide est guidé en circuit fermé à travers l'élément réflecteur (2), dans lequel il passe par au moins un échangeur de chaleur (3).

4. Procédé selon la revendication 3, **caractérisé en ce que** le liquide est guidé en circuit fermé à travers un élément faisant office d'accumulateur de chaleur.

5. Procédé selon la revendication 3 ou 4, **caractérisé en ce que** le liquide, lors de son passage par le circuit fermé, est maintenu de manière réglée à une température prédéfinie.

6. Procédé selon la revendication 5, **caractérisé en ce qu'**on fait appel, à titre de valeur de réglage, au courant volumique du liquide à travers le circuit.

7. Procédé selon la revendication 5 ou 6, **caractérisé en ce que** le réglage de la température du liquide a lieu d'une manière telle que celle-ci se situe entre 80 °C et 400 °C.

8. Procédé selon la revendication 7, **caractérisé en ce que** le réglage de la température du liquide a lieu d'une manière telle que le liquide ne s'évapore pas.

9. Procédé selon l'une quelconque des revendications 3 à 8, **caractérisé en ce que** la chaleur prélevée à partir du liquide par l'échangeur de chaleur (3) est acheminée à un processus secondaire.

10. Procédé selon l'une quelconque des revendications 1 à 9, **caractérisé en ce que** ledit au moins un élément réflecteur (2) est soumis à un nettoyage au terme d'une durée d'utilisation.

11. Procédé selon la revendication 10, **caractérisé en ce que** le nettoyage comprend un nettoyage de la surface (4) du réflecteur par soufflage avec un gaz, en particulier avec de l'air.

12. Procédé selon la revendication 10, **caractérisé en ce que** le nettoyage de la surface (4) du réflecteur comprend l'utilisation de moyens mécaniques, en particulier d'une brosse de nettoyage.

13. Procédé selon la revendication 10, **caractérisé en ce que** le nettoyage de la surface (4) du réflecteur comprend l'utilisation d'agents de nettoyage liquides et/ou chimiques, en particulier d'éthanol ou d'acide nitrique ou d'un mélange d'agents de nettoyage et d'eau.
